# EUROPÄISCHE PATENTSCHRIFT

(11) **EP 4 082 318 B1**
(45) Veröffentlichungstag und Bekanntmachung des Hinweises auf die Patenterteilung: **20.11.2024**
(21) Anmeldenummer: 21171257.5
(22) Anmeldetag: 29.04.2021
(51) Int. Cl.: G05D 1/00, A01D 34/00, A01D 75/18

(54) **OUTDOORBEARBEITUNGSSYSTEM**
OUTDOOR PROCESSING SYSTEM
SYSTÈME DE TRAITEMENT EXTÉRIEUR

(43) Veröffentlichungstag der Anmeldung: 02.11.2022
(73) Patentinhaber: Andreas Stihl AG & Co. KG, 71336 Waiblingen (DE)
(72) Erfinder: WOLF, Philip, 6341 Ebbs (AT); DUREGGER, Georg, 6342 Niederndorf (AT)
(74) Vertreter: Patentanwälte Ruff, Wilhelm, Beier, Dauster & Partner mbB

(56) Entgegenhaltungen:
- CN-A- 112 586 194
- DE-U1- 202012 102 637
- DE-U1- 202018 006 349

## Beschreibung

### ANWENDUNGSGEBIET UND STAND DER TECHNIK

Die Erfindung bezieht sich auf ein Outdoorbearbeitungssystem.

Die DE 20 2012 102 637 U1 offenbart ein selbstfahrendes Bodenbearbeitungsgerät, insbesondere einen Mähroboter, wobei das Bodenbearbeitungsgerät ein Chassis, ein Fahrwerk mit Fahrantrieb, ein angetriebenes Bearbeitungswerkzeug, eine Steuerung, ein Auflager für eine auf dem Chassis beweglich aufliegende Abdeckung und eine mit der Abdeckung zusammenwirkende Detektionseinrichtung zur Erfassung von Abdeckungsbewegungen aufweist, wobei das Auflager mehrere am Chassis angeordnete Lagerstellen aufweist, wobei die Detektionseinrichtung funktional und örtlich getrennt von den Lagerstellen angeordnet ist.

### AUFGABE UND LÖSUNG

Der Erfindung liegt als Aufgabe die Bereitstellung eines Outdoorbearbeitungssystems zugrunde, das verbesserte Eigenschaften aufweist, insbesondere einen verbesserten Betrieb eines Outdoorbearbeitungsroboters ermöglicht.

Die Erfindung löst diese Aufgabe durch die Bereitstellung eines Outdoorbearbeitungssystems mit den Merkmalen des Anspruchs 1. Vorteilhafte Weiterbildungen und/oder Ausgestaltungen der Erfindung sind in den abhängigen Ansprüchen beschrieben.

Das erfindungsgemäße Outdoorbearbeitungssystem weist einen autonomen mobilen Outdoorbearbeitungsroboter und eine Sensor- und Steuerungseinrichtung auf. Der Outdoorbearbeitungsroboter weist ein Fahrwerk und ein Berührungselement auf. Das Fahrwerk ist zu einer Fahrbewegung des Outdoorbearbeitungsroboters in einer Fahrtrichtung ausgebildet. Das Berührungselement ist zu einer Ausweichbewegung in einer Ausweichrichtung durch die Fahrbewegung in die Fahrtrichtung und eine, insbesondere unmittelbare, Hindernisberührung mit einem unteren Berührungspunkt unterhalb einer Höhengrenze, insbesondere geformt, ausgebildet und gegenüber dem Fahrwerk beweglich gelagert. Des Weiteren ist das Berührungselement zu einer Erfassungsbewegung in einer Erfassungsrichtung durch die Fahrbewegung in die Fahrtrichtung und eine, insbesondere unmittelbare, Hindernisberührung mit einem oberen Berührungspunkt auf oder oberhalb der Höhengrenze, insbesondere geformt, ausgebildet und gegenüber dem Fahrwerk beweglich gelagert. Die Ausweichrichtung und die Erfassungsrichtung sind, insbesondere voneinander, verschieden. Die Sensor- und Steuerungseinrichtung ist zur, insbesondere automatischen, Erfassung, insbesondere nur, der Erfassungsbewegung oder einer durch die Erfassungsbewegung verursachten Bewegung und zur, insbesondere automatischen, Steuerung einer Schutzfunktion des Outdoorbearbeitungsroboters, insbesondere nur bzw. allein, ausgelöst durch, insbesondere nur, die erfasste Erfassungsbewegung oder die erfasste Bewegung ausgebildet. Außerdem erfasst nicht oder wertet nicht die Sensor- und Steuerungseinrichtung die Ausweichbewegung oder eine durch die Ausweichbewegung verursachte Bewegung aus. In anderen Worten: die Sensor- und Steuerungseinrichtung ist nicht zur Erfassung der Ausweichbewegung oder einer durch die Ausweichbewegung verursachten Bewegung und/oder nicht zur Steuerung der Schutzfunktion ausgelöst durch die erfasste Ausweichbewegung oder die erfasste Bewegung ausgebildet.

Dies ermöglicht eine hindernishöhengefilterte Steuerung der Schutzfunktion. Somit ermöglicht dies einerseits einen robusteren Betrieb des Outdoorbearbeitungsroboters, insbesondere bei Berührung eines hohen Hindernisses, und andererseits einen ungestörten bzw. unbeeinflussten Betrieb des Outdoorbearbeitungsroboters, insbesondere bei Berührung eines niedrigen Hindernisses, wie z.B. einem vernachlässigbar kleinen Gegenstand, insbesondere durch Verminderung einer Fehlauslösung der Sensor- und Steuerungseinrichtung. Somit ermöglicht dies einen verbesserten Betrieb des Outdoorbearbeitungsroboters.

Insbesondere können/kann das Outdoorbearbeitungssystem, der Outdoorbearbeitungsroboter und/oder die Sensor- und Steuerungseinrichtung elektrisch sein.

Der Outdoorbearbeitungsroboter kann die Sensor- und Steuerungseinrichtung aufweisen.

Autonomer mobiler Outdoorbearbeitungsroboter kann bedeuten, dass der Outdoorbearbeitungsroboter dazu ausgebildet sein kann, sich automatisch bzw. selbstständig bzw. selbstgesteuert und/oder unabhängig von einem Nutzer, insbesondere auf einer Fläche, die vorgegeben und/oder begrenzt sein kann, zu bewegen und/oder automatisch bzw. selbstständig bzw. selbstgesteuert und/oder unabhängig von dem Nutzer, insbesondere die Fläche, zu bearbeiten, insbesondere das Bearbeiten bzw. die Bearbeitung anzufangen und/oder zu beenden.

Das Outdoorbearbeitungssystem kann ein Frei- bzw. Außenflächenbearbeitungssystem oder ein Grünflächenbearbeitungssystem sein. Zusätzlich oder alternativ kann der Outdoorbearbeitungsroboter ein Frei- bzw. Außenflächenbearbeitungsroboter oder ein Grünflächenbearbeitungsroboter sein. Weiter zusätzlich oder alternativ kann der Outdoorbearbeitungsroboter ein Garten- und/oder Terrassenbearbeitungsgerät sein.

Der Begriff "Fahrgestell" kann synonym für den Begriff "Fahrwerk" verwendet werden.

Das Fahrwerk kann mindestens ein angetriebenes Laufrad und mindestens ein nichtangetriebenes Laufrad zu der Fahrbewegung des Outdoorbearbeitungsroboters, insbesondere auf der Fläche, aufweisen. Mindestens das nicht-angetriebene Laufrad kann vor mindestens dem angetriebenen Laufrad in der Fahrtrichtung, insbesondere angeordnet, sein.

Die Fahrbewegung in die Fahrtrichtung kann eine Vorwärtsbewegung sein.

Der Begriff "Berührungsteil" kann synonym für den Begriff "Berührungselement" verwendet werden.

Die Hindernisberührung kann mit einer in die Fahrtrichtung bzw. nach vorne gewandten Seite bzw. Vorderseite des Berührungselements sein.

Vor dem Berührungselement, insbesondere in der Fahrtrichtung, braucht oder kann nichts des Outdoorbearbeitungsroboters, insbesondere auf gleicher Höhe und/oder unterhalb, insbesondere angeordnet, sein.

Die Höhengrenze kann durch mindestens einen Abschnitt einer Form bzw. einer Kontur bzw. eines Umrisses des Berührungselements definiert sein. Zusätzlich oder alternativ kann die Höhengrenze eine Höhenlinie aufweisen, insbesondere sein. Weiter zusätzlich oder alternativ kann die Höhengrenze als Filtergrenze bezeichnet werden.

Das Berührungselement kann zu der Ausweichbewegung und/oder der Erfassungsbewegung nur bzw. allein und/oder unmittelbar und/oder mechanisch und/oder verursacht durch die Fahrbewegung in die Fahrtrichtung und die, insbesondere jeweilige, Hindernisberührung und/oder durch die Fahrbewegung in die Fahrtrichtung und die, insbesondere jeweilige, Hindernisberührung gleichzeitig bzw. gemeinsam bzw. miteinander ausgebildet sein.

Die Ausweichrichtung und die Erfassungsrichtung können einander entgegengesetzt sein.

Die Sensor- und Steuerungseinrichtung kann zur Erfassung der Erfassungsbewegung oder der Bewegung und/oder zur Steuerung der Schutzfunktion ausgelöst durch die erfasste Erfassungsbewegung oder die erfasste Bewegung bei einer Mindestbewegung bzw. einem Mindestwert ausgebildet sein. Zusätzlich oder alternativ kann die Sensor- und Steuerungseinrichtung einen Hallsensor und/oder einen Schalter und/oder einen Taster, insbesondere zur Erfassung der Erfassungsbewegung oder der Bewegung, aufweisen. Weiter zusätzlich oder alternativ kann die Sensor- und Steuerungseinrichtung eine Recheneinheit, insbesondere einen Prozessor, und/oder eine Speichereinheit aufweisen.

Der Begriff "bewirkt" kann synonym für den Begriff "verursacht" verwendet werden.

In einer Weiterbildung der Erfindung ist die Ausweichrichtung, insbesondere mindestens teilweise, nach oben. Zusätzlich oder alternativ ist die Erfassungsrichtung, insbesondere mindestens teilweise, nach unten. Dies, insbesondere die Ausweichrichtung nach oben, ermöglicht dem niedrigen Hindernis auszuweichen.

In einer Weiterbildung der Erfindung definiert bzw. weist das Fahrwerk eine Fahrebene auf. Zusätzlich sind der untere Berührungspunkt und der obere Berührungspunkt entlang einer in Bezug auf die Fahrebene orthogonalen Höhenrichtung, insbesondere angeordnet. Weiter zusätzlich oder alternativ ist die Höhengrenze, insbesondere in der Höhenrichtung, über der Fahrebene, insbesondere angeordnet. Weiter zusätzlich oder alternativ ist die Ausweichrichtung, insbesondere nicht-orthogonal, insbesondere parallel, in Bezug auf die Höhenrichtung, von der Fahrebene weg. Weiter zusätzlich oder alternativ ist die Erfassungsrichtung, insbesondere nicht-orthogonal, insbesondere antiparallel, in Bezug auf die Höhenrichtung, zu der Fahrebene hin. Insbesondere kann das Fahrwerk Laufräder zu der Fahrbewegung des Outdoorbearbeitungsroboters, insbesondere auf der Fläche, aufweisen. Die Laufräder können die Fahrebene definieren. Zusätzlich oder alternativ kann die Fahrebene horizontal sein. Weiter zusätzlich oder alternativ kann die Höhenrichtung vertikal sein. Weiter zusätzlich oder alternativ kann nicht-orthogonal eine Abweichung, insbesondere eine Winkelabweichung, von maximal 30 ° (Grad), insbesondere maximal 20 °, insbesondere maximal 10 °, und/oder minimal 150 °, insbesondere minimal 160 °, insbesondere minimal 170 °, bedeuten.

In einer Weiterbildung der Erfindung weist der Outdoorbearbeitungsroboter mindestens eine Elementschwinge auf. Mindestens die Elementschwinge ist drehbeweglich um eine Drehachse herum gelagert. Die Drehachse ist nicht-parallel, insbesondere orthogonal, in Bezug auf die Fahrtrichtung, insbesondere angeordnet. An mindestens die Elementschwinge ist das Berührungselement derart angebunden, dass die Ausweichbewegung in der Ausweichrichtung eine Ausweich-Drehbewegung mindestens der Elementschwinge um die Drehachse herum in einer Ausweich-Drehrichtung, insbesondere unmittelbar, verursacht und die Erfassungsbewegung in der Erfassungsrichtung eine Erfassungs-Drehbewegung mindestens der Elementschwinge um die Drehachse herum in einer Erfassungs-Drehrichtung, insbesondere unmittelbar, verursacht. Die Ausweich-Drehrichtung und die Erfassungs-Drehrichtung sind, insbesondere voneinander, verschieden. Die Sensor- und Steuerungseinrichtung ist zur, insbesondere automatischen, Erfassung, insbesondere nur, der Erfassungs-Drehbewegung oder einer durch die Erfassungs-Drehbewegung verursachten Bewegung und zur, insbesondere automatischen, Steuerung der Schutzfunktion, insbesondere nur bzw. allein, ausgelöst durch, insbesondere nur, die erfasste Erfassungs-Drehbewegung oder die erfasste Bewegung ausgebildet. Des Weiteren erfasst nicht oder wertet nicht die Sensor- und Steuerungseinrichtung die Ausweich-Drehbewegung oder eine durch die Ausweich-Drehbewegung verursachte Bewegung aus. In anderen Worten: die Sensor- und Steuerungseinrichtung ist nicht zur Erfassung der Ausweich-Drehbewegung oder einer durch die Ausweich-Drehbewegung verursachten Bewegung und/oder nicht zur Steuerung der Schutzfunktion ausgelöst durch die erfasste Ausweich-Drehbewegung oder die erfasste Bewegung ausgebildet. Dies ermöglicht mindestens eine Bewegung in mindestens eine Richtung verschieden von oben und/oder unten und/oder der Höhenrichtung. Insbesondere kann die Bewegung in die Richtung einfach zu erfassen sein. Insbesondere kann der Begriff "Elementträger" oder "Elementarm" synonym für den Begriff "Elementschwinge" verwendet werden. Zusätzlich oder alternativ kann mindestens die Elementschwinge gegenüber dem Fahrwerk drehbeweglich gelagert sein. Weiter zusätzlich oder alternativ kann nicht-parallel eine Abweichung, insbesondere eine Winkelabweichung, von minimal 60 °, insbesondere minimal 70 °, insbesondere minimal 80 °, und/oder maximal 120 °, insbesondere maximal 110 °, insbesondere maximal 100 °, bedeuten. Weiter zusätzlich oder alternativ kann die Drehachse nicht-orthogonal, insbesondere parallel, in Bezug auf die Fahrebene, insbesondere angeordnet, sein. Weiter zusätzlich oder alternativ kann die Drehachse horizontal sein. Weiter zusätzlich oder alternativ kann an mindestens ein freies Ende mindestens der Elementschwinge das Berührungselement angebunden sein. Weiter zusätzlich oder alternativ kann an mindestens die Elementschwinge das Berührungselement mechanisch und/oder unmittelbar und/oder starr bzw. fest angebunden sein. Weiter zusätzlich oder alternativ können mindestens die Elementschwinge und das Berührungselement, insbesondere miteinander, einstückig bzw. einteilig, insbesondere ausgebildet, sein. Weiter zusätzlich oder alternativ können die Ausweich-Drehrichtung und die Erfassungs-Drehrichtung einander entgegengesetzt sein.

In einer Ausgestaltung der Erfindung ist mindestens die Elementschwinge eine geschobene Elementschwinge. Zusätzlich oder alternativ ist die Drehachse oberhalb der Höhengrenze, insbesondere bei keiner Hindernisberührung, insbesondere angeordnet. Dies, insbesondere die geschobene Elementschwinge, ermöglicht die Hindernisberührung durch das Berührungselement. Zusätzlich oder alternativ ermöglicht dies, insbesondere die Drehachse oberhalb der Höhengrenze, dass die Ausweichrichtung und die Erfassungsrichtung verschieden sind. Insbesondere kann das Berührungselement vor der Drehachse, insbesondere in der Fahrtrichtung, insbesondere angeordnet, sein.

In einer Weiterbildung der Erfindung weist das Berührungselement unterhalb der Höhengrenze einen, insbesondere schrägen, Verlauf von vorne oben nach unten hinten, insbesondere entgegen der Fahrtrichtung, auf bzw. ist von vorne oben nach unten hinten verlaufend geformt, insbesondere bei keiner Hindernisberührung. Insbesondere hat bzw. weist der Verlauf einen Winkel zu der Fahrtrichtung von maximal 60 °, insbesondere maximal 45 °, insbesondere 30 °, und/oder minimal 10 ° auf. Zusätzlich oder alternativ weist das Berührungselement auf oder oberhalb der Höhengrenze einen Verlauf von vorne unten nach oben, insbesondere hinten, insbesondere entgegen der Fahrtrichtung, auf bzw. ist von vorne unten nach oben, insbesondere hinten, verlaufend geformt, insbesondere bei keiner Hindernisberührung. Mindestens der Verlauf ermöglicht, insbesondere die verschiedenen Verläufe ermöglichen, die Ausweichbewegung in die Ausweichrichtung und/oder die Erfassungsbewegung in die, insbesondere verschiedene, Erfassungsrichtung. Insbesondere kann der Verlauf von vorne oben nach unten hinten gerade oder, insbesondere nach außen, konvex sein.

In einer Weiterbildung der Erfindung weist der Outdoorbearbeitungsroboter eine Abdeckhaube auf. Die Abdeckhaube ist oberhalb des Berührungselements, insbesondere angeordnet. Des Weiteren ist die Abdeckhaube gegenüber dem Fahrwerk, insbesondere unmittelbar, beweglich gelagert. Das Berührungselement ist derart gegenüber der Abdeckhaube beweglich gelagert, dass die Erfassungsbewegung eine Haubenbewegung, insbesondere entgegen der Fahrtrichtung, der Abdeckhaube gegenüber dem Fahrwerk verursacht, insbesondere und die Ausweichbewegung nicht. Die Sensor- und Steuerungseinrichtung ist zur, insbesondere automatischen, Erfassung der Haubenbewegung oder einer durch die Haubenbewegung verursachten Bewegung und zur, insbesondere automatischen, Steuerung der Schutzfunktion, insbesondere nur bzw. allein, ausgelöst durch die erfasste Haubenbewegung oder die erfasste Bewegung ausgebildet. Dies, insbesondere die Haubenbewegung, ermöglicht eine Einfachheit der Erfassung. Zusätzlich oder alternativ ermöglicht die Abdeckhaube einen Schutz des Outdoorbearbeitungsroboters, insbesondere des Fahrwerks und/oder der Sensor- und Steuerungseinrichtung. Insbesondere kann der Begriff "Schutzhaube" synonym für den Begriff "Abdeckhaube" verwendet werden. Zusätzlich oder alternativ kann die Abdeckhaube hinter dem Berührungselement, insbesondere entgegen der Fahrtrichtung, auf gleicher Höhe und/oder unterhalb des Berührungselements, insbesondere angeordnet, sein. Weiter zusätzlich oder alternativ kann mindestens die Elementschwinge, insbesondere unmittelbar, an der Abdeckhaube drehbeweglich gelagert sein. Weiter zusätzlich oder alternativ kann die Erfassungs-Drehbewegung die Haubenbewegung, insbesondere unmittelbar, verursachen. Weiter zusätzlich oder alternativ braucht oder kann die Ausweich-Drehbewegung die Haubenbewegung nicht verursachen. Weiter zusätzlich oder alternativ kann die Formulierung "nach hinten" synonym für die Formulierung "entgegen der Fahrtrichtung" verwendet werden.

In einer Ausgestaltung der Erfindung ist die Abdeckhaube zu der Haubenbewegung durch die Fahrbewegung in die Fahrtrichtung und eine, insbesondere unmittelbare, Hindernisberührung mit einem Haubenpunkt, insbesondere geformt, ausgebildet. Dies ermöglicht die Steuerung der Schutzfunktion bei Berührung eines besonders hohen Hindernisses und/oder, insbesondere somit, einen Synergieeffekt. Insbesondere kann der Haubenpunkt oberhalb des oberen Berührungspunkts, insbesondere angeordnet, sein. Zusätzlich oder alternativ kann die Abdeckhaube zu der Haubenbewegung nur bzw. allein und/oder unmittelbar und/oder mechanisch und/oder verursacht durch die Fahrbewegung in die Fahrtrichtung und die Hindernisberührung und/oder durch die Fahrbewegung in die Fahrtrichtung und die Hindernisberührung gleichzeitig bzw. gemeinsam bzw. miteinander ausgebildet sein.

In einer Weiterbildung, insbesondere einer Ausgestaltung, der Erfindung ist das Berührungselement mittels einer Feder und/oder an der Abdeckhaube, soweit vorhanden, aufgehängt. Zusätzlich oder alternativ ist das Berührungselement zu einer, insbesondere unmittelbaren, Berührung bzw. einem Aufliegen auf einer, insbesondere der, zu bearbeitenden Fläche ausgebildet. Dies, insbesondere die Aufhängung, ermöglicht eine Erleichterung der Ausweichbewegung in die Ausweichrichtung, insbesondere nach oben. Zusätzlich oder alternativ ermöglicht dies, insbesondere die Berührung der Fläche, eine Definierung der Höhengrenze, insbesondere über der Fahrebene. Insbesondere kann die Feder eine Schrauben -und/oder Zugfeder sein. Zusätzlich oder alternativ kann die Fläche mittels des Outdoorbearbeitungsroboters zu bearbeiten sein. Weiter zusätzlich oder alternativ kann die Fläche eine Freifläche, insbesondere ein unversiegelter Boden, oder eine Grünfläche sein, wie eine Wiese mit Rasen. Weiter zusätzlich kann die Fläche eine Fläche mit Wegeplatten, Terrassenfließen und/oder Pflastersteinen sein.

In einer Ausgestaltung der Erfindung ist das Berührungselement zu einem Gleiten, insbesondere einem Aufgleiten, auf der Fläche, insbesondere als eine Kufe, ausgebildet. Zusätzlich oder alternativ ist das Berührungselement zu einem Rollen auf der Fläche, insbesondere als eine Walze, ausgebildet. Insbesondere kann der Begriff "Schlitten" synonym für den Begriff "Kufe" verwendet werden.

In einer Weiterbildung der Erfindung weist der Outdoorbearbeitungsroboter ein Bearbeitungswerkzeug auf. Das Berührungselement ist vor dem Bearbeitungswerkzeug, insbesondere in der Fahrtrichtung, insbesondere angeordnet. Dies ermöglicht, insbesondere bei der Fahrbewegung in die Fahrtrichtung, die Steuerung der Schutzfunktion für einen robusteren Betrieb. Insbesondere kann das Bearbeitungswerkzeug zur Bearbeitung der Fläche ausgebildet sein. Zusätzlich oder alternativ kann das Bearbeitungswerkzeug ein Schneidwerkzeug aufweisen, insbesondere sein. Weiter zusätzlich oder alternativ kann das Bearbeitungswerkzeug ein Reinigungswerkzeug, insbesondere eine Drahtbürste, aufweisen, insbesondere sein.

In einer Weiterbildung der Erfindung weist der Outdoorbearbeitungsroboter ein, insbesondere das, Bearbeitungswerkzeug auf. Das Bearbeitungswerkzeug weist ein Rasenmähwerkzeug auf, insbesondere ist das Rasenmähwerkzeug. Zusätzlich oder alternativ ist der Outdoorbearbeitungsroboter als ein Rasenmähroboter ausgebildet. Insbesondere kann das Rasenmähwerkzeug zum Mähen der Fläche ausgebildet sein. Zusätzlich oder alternativ kann das Rasenmähwerkzeug mindestens einen Mähfaden, mindestens ein Kunststoffmesser, mindestens ein Metallmesser und/oder ein Metallschneideblatt mit mindestens einer Schneidkante und/oder mit mindestens einem Schneidezahn aufweisen. Weiter zusätzlich oder alternativ kann der Rasenmähroboter ein Mulchmähroboter sein.

In einer Weiterbildung der Erfindung weist der Outdoorbearbeitungsroboter ein Werkzeug-System auf. Das Werkzeug-System weist ein, insbesondere das, Bearbeitungswerkzeug auf. Die Sensor- und Steuerungseinrichtung ist zur, insbesondere automatischen, Steuerung, insbesondere zur Deaktivierung, des Werkzeug-Systems als die Schutzfunktion ausgebildet. Zusätzlich oder alternativ weist der Outdoorbearbeitungsroboter ein Fahr-System auf. Das Fahr-System weist das Fahrwerk auf. Die Sensor- und Steuerungseinrichtung ist zur, insbesondere automatischen, Steuerung, insbesondere zur Deaktivierung, des Fahr-Systems als die Schutzfunktion ausgebildet. Dies ermöglicht einen robusteren Betrieb. Insbesondere können/kann das Werkzeug-System und/oder das Fahr-System elektrisch und/oder steuerbar sein. Zusätzlich oder alternativ kann das Werkzeug-System einen, insbesondere elektrischen und/oder steuerbaren, Antriebsmotor zum Antrieb und/oder zur Bewegung des Bearbeitungswerkzeugs aufweisen. Weiter zusätzlich oder alternativ kann das Bearbeitungswerkzeug antreibbar und/oder beweglich sein. Weiter zusätzlich oder alternativ kann das Bearbeitungswerkzeug zur Bearbeitung der Fläche ausgebildet sein. Weiter zusätzlich oder alternativ kann das Bearbeitungswerkzeug ein Schneidwerkzeug aufweisen, insbesondere sein. Weiter zusätzlich oder alternativ kann das Bearbeitungswerkzeug ein Reinigungswerkzeug, insbesondere eine Drahtbürste, aufweisen, insbesondere sein. Weiter zusätzlich oder alternativ kann das Fahr-System einen, insbesondere elektrischen und/oder steuerbaren, Antriebsmotor zum Antrieb und/oder zur Bewegung mindestens des angetriebenen Laufrads aufweisen. Weiter zusätzlich oder alternativ kann die Sensor- und Steuerungseinrichtung zur Steuerung des Fahr-Systems zur Bewegung um das, insbesondere hohe, Hindernis herum und/oder von dem, insbesondere hohen, Hindernis weg als die Schutzfunktion ausgebildet sein. Weiter zusätzlich oder alternativ kann der Begriff "Stoppen" synonym für den Begriff "Deaktivierung" verwendet werden.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgend anhand der Figuren erläutert sind. Dabei zeigen:
- Fig. 1: eine Ansicht von einer Seite eines erfindungsgemäßen Outdoorbearbeitungssystems aufweisend einen Outdoorbearbeitungsroboter,
- Fig. 2: eine teilweise Schnittansicht von einer Seite des Outdoorbearbeitungsroboters der Fig. 1,
- Fig. 3: eine Ansicht von oben des Outdoorbearbeitungsroboters der Fig. 1, und
- Fig. 4: eine schematische Ansicht von unten des Outdoorbearbeitungsroboters der Fig. 1.

### DETAILLIERTE BESCHREIBUNG DER AUSFÜHRUNGSBEISPIELE

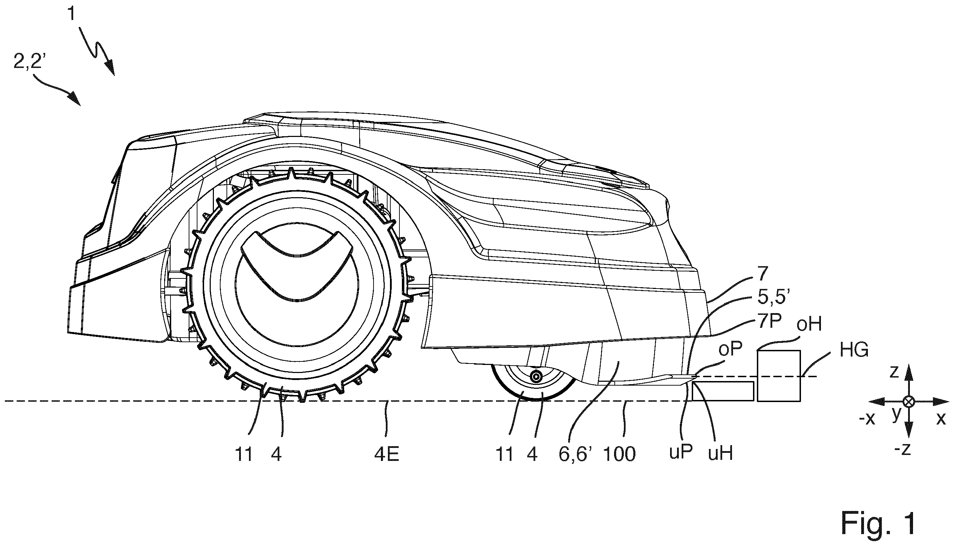

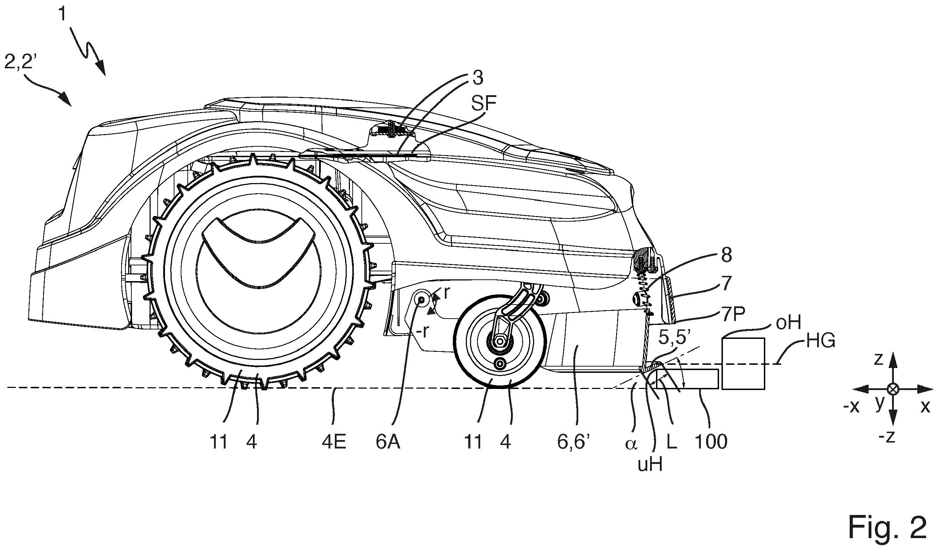

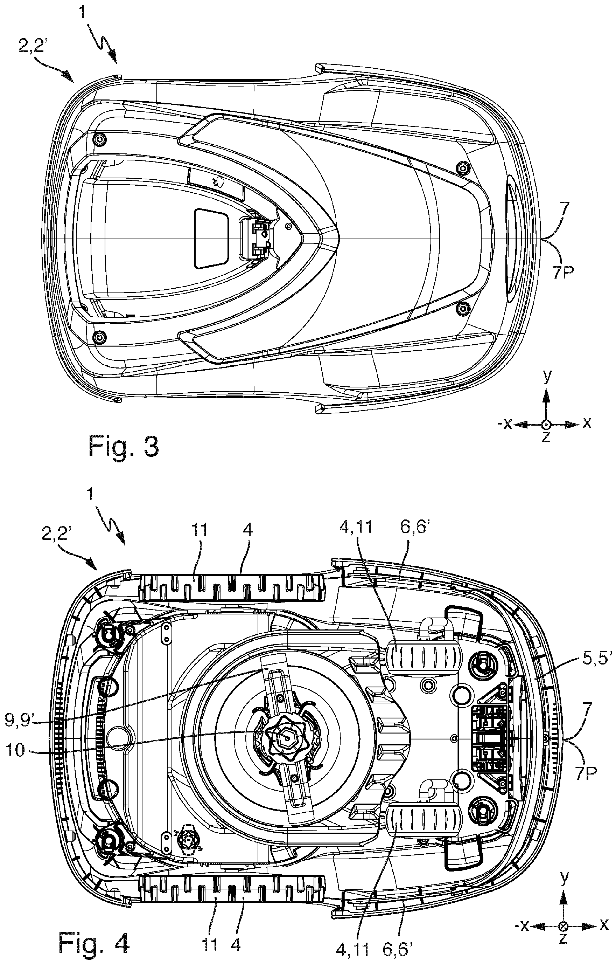

Fig. 1 bis 4 zeigen ein erfindungsgemäßes Outdoorbearbeitungssystem 1. Das Outdoorbearbeitungssystem 1 weist einen autonomen mobilen Outdoorbearbeitungsroboter 2 und eine Sensor- und Steuerungseinrichtung 3 auf. Der Outdoorbearbeitungsroboter 2 weist ein Fahrwerk 4 und ein Berührungselement 5 auf. Das Fahrwerk 4 ist zu einer Fahrbewegung des Outdoorbearbeitungsroboters 2 in einer, insbesondere horizontalen, Fahrtrichtung x ausgebildet, insbesondere bewegt und fährt somit. Das Berührungselement 5 ist zu einer Ausweichbewegung in einer Ausweichrichtung z durch die Fahrbewegung in die Fahrtrichtung x und eine Hindernisberührung bzw. eine Berührung mit einem, insbesondere niedrigen, Hindernis uH mit einem unteren Berührungspunkt uP unterhalb einer Höhengrenze HG ausgebildet und gegenüber dem Fahrwerk 4 beweglich gelagert, insbesondere berührt und bewegt sich somit und weicht somit aus. Des Weiteren ist das Berührungselement 5 zu einer Erfassungsbewegung in einer Erfassungsrichtung -z durch die Fahrbewegung in die Fahrtrichtung x und eine Hindernisberührung bzw. eine Berührung mit einem, insbesondere hohen, Hindernis oH mit einem oberen Berührungspunkt oP auf oder oberhalb der Höhengrenze HG ausgebildet und gegenüber dem Fahrwerk 4 beweglich gelagert, insbesondere berührt und bewegt sich somit und erfasst somit. Die Ausweichrichtung z und die Erfassungsrichtung -z sind verschieden. Die Sensor- und Steuerungseinrichtung 3 ist zur Erfassung der Erfassungsbewegung oder einer durch die Erfassungsbewegung verursachten Bewegung und zur Steuerung einer Schutzfunktion SF des Outdoorbearbeitungsroboters 2 ausgelöst durch die erfasste Erfassungsbewegung oder die erfasste Bewegung ausgebildet, insbesondere erfasst und steuert somit. Außerdem erfasst nicht oder wertet nicht die Sensor- und Steuerungseinrichtung 3 die Ausweichbewegung oder eine durch die Ausweichbewegung verursachte Bewegung aus.

Im Detail ist die Ausweichrichtung z nach oben.

Zusätzlich oder alternativ ist die Erfassungsrichtung -z nach unten.

Weiter weist das Fahrwerk 4 eine Fahrebene 4E auf.

Zusätzlich sind der untere Berührungspunkt uP und der obere Berührungspunkt oP entlang einer in Bezug auf die Fahrebene 4E orthogonalen Höhenrichtung z.

Weiter zusätzlich oder alternativ ist die Höhengrenze HG, insbesondere in der Höhenrichtung z, über der Fahrebene 4E.

Weiter zusätzlich oder alternativ ist die Ausweichrichtung z, insbesondere nicht-orthogonal, insbesondere parallel, in Bezug auf die Höhenrichtung z, von der Fahrebene 4E weg.

Weiter zusätzlich oder alternativ ist die Erfassungsrichtung -z, insbesondere nicht-orthogonal, insbesondere antiparallel, in Bezug auf die Höhenrichtung z, zu der Fahrebene 4E hin.

Zudem weist der Outdoorbearbeitungsroboter 2 mindestens eine Elementschwinge 6 auf. Mindestens die Elementschwinge 6 ist drehbeweglich um eine Drehachse 6A herum gelagert. Die Drehachse 6A ist nicht-parallel, insbesondere orthogonal, in Bezug auf die Fahrtrichtung x. An mindestens die Elementschwinge 6 ist das Berührungselement 5 derart angebunden, dass die Ausweichbewegung in der Ausweichrichtung z eine Ausweich-Drehbewegung mindestens der Elementschwinge 6 um die Drehachse 6A herum in einer Ausweich-Drehrichtung r verursacht und die Erfassungsbewegung in der Erfassungsrichtung -z eine Erfassungs-Drehbewegung mindestens der Elementschwinge 6 um die Drehachse 6A herum in einer Erfassungs-Drehrichtung -r verursacht. Die Ausweich-Drehrichtung r und die Erfassungs-Drehrichtung -r sind verschieden. Die Sensor- und Steuerungseinrichtung 3 ist zur Erfassung der Erfassungs-Drehbewegung oder einer durch die Erfassungs-Drehbewegung verursachten Bewegung und zur Steuerung der Schutzfunktion SF ausgelöst durch die erfasste Erfassungs-Drehbewegung oder die erfasste Bewegung ausgebildet, insbesondere erfasst und steuert somit. Des Weiteren erfasst nicht oder wertet nicht die Sensor- und Steuerungseinrichtung 3 die Ausweich-Drehbewegung oder eine durch die Ausweich-Drehbewegung verursachte Bewegung aus.

In dem gezeigten Ausführungsbeispiel weist der Outdoorbearbeitungsroboter 2 zwei Elementschwingen 6 auf. In alternativen Ausführungsbeispielen kann der Outdoorbearbeitungsroboter nur eine einzige Elementschwinge oder mindestens drei Elementschwingen aufweisen.

Im Detail ist mindestens die Elementschwinge 6 eine geschobene Elementschwinge 6`.

Zusätzlich oder alternativ ist die Drehachse 6A oberhalb der Höhengrenze HG, insbesondere bei keiner Hindernisberührung.

Außerdem erstreckt in dem gezeigten Ausführungsbeispiel das Berührungselement 5 sich von rechts, insbesondere einer rechten Seite, nach links, insbesondere zu einer linken Seite, des Outdoorbearbeitungsroboters 2 bzw. nicht-parallel, insbesondere orthogonal, in Bezug auf die Fahrtrichtung x und/oder nicht-parallel, insbesondere orthogonal, in Bezug auf die Höhenrichtung z und/oder nicht-orthogonal, insbesondere parallel, in Bezug auf die Fahrebene 4E und/oder die Drehachse 6A.

Weiter weist das Berührungselement unterhalb der Höhengrenze HG einen Verlauf von vorne oben nach unten hinten, insbesondere entgegen der Fahrtrichtung -x, auf, insbesondere bei keiner Hindernisberührung.

Insbesondere weist der Verlauf mindestens einen Winkel α zu der, insbesondere horizontalen, Fahrtrichtung x von minimal 10 ° und/oder maximal 60 ° auf, insbesondere bei keiner Hindernisberührung.

Zusätzlich oder alternativ weist der Verlauf eine Länge L von minimal 5 mm (Millimeter) und/oder maximal 100 mm auf.

Weiter zusätzlich oder alternativ weist das Berührungselement 5 auf oder oberhalb der Höhengrenze HG einen Verlauf von vorne unten nach oben, insbesondere hinten, insbesondere entgegen der Fahrtrichtung -x, auf, insbesondere bei keiner Hindernisberührung.

Zudem weist der Outdoorbearbeitungsroboter 2 eine Abdeckhaube 7 auf. Die Abdeckhaube 7 ist oberhalb des Berührungselements 5. Des Weiteren ist die Abdeckhaube 7 gegenüber dem Fahrwerk 4 beweglich gelagert. Das Berührungselement 5 ist derart gegenüber der Abdeckhaube 7 beweglich gelagert, dass die Erfassungsbewegung eine Haubenbewegung, insbesondere entgegen der Fahrtrichtung -x, der Abdeckhaube 7 gegenüber dem Fahrwerk 4 verursacht, insbesondere und die Ausweichbewegung nicht. Die Sensor- und Steuerungseinrichtung 3 ist zur Erfassung der Haubenbewegung oder einer durch die Haubenbewegung verursachten Bewegung und zur Steuerung der Schutzfunktion SF ausgelöst durch die erfasste Haubenbewegung oder die erfasste Bewegung ausgebildet, insbesondere erfasst und steuert somit.

Im Detail ist die Abdeckhaube 7 zu der Haubenbewegung durch die Fahrbewegung in die Fahrtrichtung x und eine Hindernisberührung mit einem Haubenpunkt 7P ausgebildet.

In dem gezeigten Ausführungsbeispiel ist mindestens die Elementschwinge 6 an der Abdeckhaube 7 drehbeweglich gelagert, insbesondere mittels mindestens eines Drehgelenks.

Zusätzlich oder alternativ verursacht die Erfassungs-Drehbewegung die Haubenbewegung, insbesondere und die Ausweich-Drehbewegung nicht.

Außerdem weist die Sensor- und Steuerungseinrichtung 3 einen Hallsensor auf, der in dem gezeigten Ausführungsbeispiel gegenüber dem Fahrwerk 4 fest angeordnet ist, insbesondere an diesem befestigt ist. Weiter weist die Sensor- und Steuerungseinrichtung 3 einen Magneten auf, der in dem gezeigten Ausführungsbeispiel gegenüber der Abdeckhaube 7 fest angeordnet ist, insbesondere an dieser befestigt ist. Der Hallsensor ist zur Erfassung einer Relativbewegung des Magnets, insbesondere zur Erfassung der Haubenbewegung, ausgebildet, insbesondere erfasst. In alternativen Ausführungsbeispielen kann der Hallsensor gegenüber der Abdeckhaube fest angeordnet sein und der Magnet kann gegenüber dem Fahrwerk fest angeordnet sein. Zusätzlich oder alternativ kann in alternativen Ausführungsbeispielen die Sensor- und Steuerungseinrichtung einen Schalter und/oder einen Taster aufweisen.

Weiter ist das Berührungselement 5 mittels einer Feder 8 und/oder an der Abdeckhaube 7 aufgehängt.

Zusätzlich oder alternativ ist das Berührungselement 5 zu einer Berührung einer zu bearbeitenden Fläche 100 ausgebildet, insbesondere berührt.

Im Detail ist das Berührungselement 5 zu einem Gleiten auf der Fläche 100, insbesondere als eine Kufe 5`, ausgebildet, insbesondere gleitet.

In alternativen Ausführungsbeispielen kann das Berührungselement zu einem Rollen auf der Fläche, insbesondere als eine Walze, ausgebildet sein, insbesondere wobei die Walze aufgrund ihres Durchmessers, insbesondere nur, über das niedrige Hindernis und nicht über das hohe Hindernis drüber rollt.

Zudem weist der Outdoorbearbeitungsroboter 2 ein Bearbeitungswerkzeug 9 auf.

Zusätzlich ist das Berührungselement 5 vor dem Bearbeitungswerkzeug 9, insbesondere in der Fahrtrichtung x.

Des Weiteren weist das Bearbeitungswerkzeug 9 ein Rasenmähwerkzeug 9' auf.

Zusätzlich oder alternativ ist der Outdoorbearbeitungsroboter 2 als ein Rasenmähroboter 2' ausgebildet.

Außerdem weist der Outdoorbearbeitungsroboter 2 ein Werkzeug-System 10 auf. Das Werkzeug-System 10 weist ein das Bearbeitungswerkzeug 9 auf. Die Sensor- und Steuerungseinrichtung 3 ist zur Steuerung, insbesondere zur Deaktivierung, des Werkzeug-Systems 10 als die Schutzfunktion SF ausgebildet, insbesondere steuert, insbesondere deaktiviert.

Zusätzlich oder alternativ weist der Outdoorbearbeitungsroboter 2 ein Fahr-System 11 auf. Das Fahr-System 11 weist das Fahrwerk 4 auf. Die Sensor- und Steuerungseinrichtung 3 ist zur Steuerung, insbesondere zur Deaktivierung, des Fahr-Systems 11 als die Schutzfunktion SF ausgebildet, insbesondere steuert, insbesondere deaktiviert.

In dem gezeigten Ausführungsbeispiel ist die Sensor- und Steuerungseinrichtung 3 zur Steuerung des Fahr-Systems 11 zur Bewegung um das, insbesondere hohe, Hindernis oH herum und/oder von dem, insbesondere hohen, Hindernis oH weg als die Schutzfunktion SF ausgebildet.

Zusammenfassend und/oder in anderen Worten:
Das drehbeweglich gelagerte bzw. schwenkbare Berührungselement 5 ausgebildet als die Kufe 5' gleitet bzw. liegt auf der Fläche 100.

Bei Berührung des hohen bzw. steil sich erhebenden Hindernisses oH fährt die Kufe 5` nicht darüber, sondern wird durch dieses nach unten gedrückt, insbesondere durch die Weiterfahrt des Fahrwerks 4 zunächst, mindestens die Elementschwinge 6 sperrt, die Abdeckhaube 7 wird bewegt bzw. ausgeschwenkt bzw. ausgelenkt, insbesondere nach hinten, und die Sensor- und Steuerungseinrichtung 3 erfasst und steuert bzw. schlägt an. Insbesondere erkennt bzw. detektiert die Sensor- und Steuerungseinrichtung 3 dies als Kollision und ändert die Bewegungsrichtung des Outdoorbearbeitungsroboters 2, insbesondere wendet und entfernt diesen von dem hohen Hindernis oH. Somit bearbeitet das Bearbeitungswerkzeug 9, insbesondere schneidet bzw. mäht das Rasenmähwerkzeug 9', das hohe Hindernis oH nicht.

Bei Berührung des niedrigen Hindernisses uH fährt die Kufe 5' darüber bzw. wird durch dieses nach oben gedrückt, insbesondere durch die Weiterfahrt des Fahrwerks 4, mindestens die Elementschwinge 6 schwenkt, die Abdeckhaube 7 wird nicht bewegt und die Sensor- und Steuerungseinrichtung 3 erfasst nichts und/oder steuert nichts.

Wie die gezeigten und oben erläuterten Ausführungsbeispiele deutlich machen, stellt die Erfindung ein vorteilhaftes Outdoorbearbeitungssystem bereit, das verbesserte Eigenschaften aufweist, insbesondere einen verbesserten Betrieb eines Outdoorbearbeitungsroboters ermöglicht.

## Patentansprüche

1. Outdoobearbeitungssystem (1),
- wobei das Outdoorbearbeitungssystem (1) einen autonomen mobilen Outdoorbearbeitungsroboter (2) und eine Sensor- und Steuerungseinrichtung (3) aufweist,
- wobei der Outdoorbearbeitungsroboter (2) ein Fahrwerk (4) und ein Berührungselement (5) aufweist,
- wobei das Fahrwerk (4) zu einer Fahrbewegung des Outdoorbearbeitungsroboters (2) in einer Fahrtrichtung (x) ausgebildet ist, und
- wobei das Berührungselement (5) zu einer Ausweichbewegung in einer Ausweichrichtung (z) durch die Fahrbewegung in die Fahrtrichtung (x) und eine Hindernisberührung mit einem unteren Berührungspunkt (uP) unterhalb einer Höhengrenze (HG) und zu einer Erfassungsbewegung in einer Erfassungsrichtung (-z) durch die Fahrbewegung in die Fahrtrichtung (x) und eine Hindernisberührung mit einem oberen Berührungspunkt (oP) auf oder oberhalb der Höhengrenze (HG) ausgebildet und gegenüber dem Fahrwerk (4) beweglich gelagert ist, wobei die Ausweichrichtung (z) und die Erfassungsrichtung (-z) verschieden sind, **dadurch gekennzeichnet,**
**dass** die Sensor- und Steuerungseinrichtung (3) zur Erfassung der Erfassungsbewegung des Berührungselementes (5) oder einer durch die Erfassungsbewegung verursachten Bewegung und zur Steuerung einer Schutzfunktion (SF) des Outdoorbearbeitungsroboters (2) ausgelöst durch die erfasste Erfassungsbewegung oder die erfasste Bewegung ausgebildet ist, und
- die Sensor- und Steuerungseinrichtung (3) ausgebildet ist, die Ausweichbewegung des Berührungselementes (5) oder eine durch die Ausweichbewegung verursachte Bewegung nicht zu erfassen oder nicht auszuwerten.

2. Outdoorbearbeitungssystem (1) nach Anspruch 1,
- wobei die Ausweichrichtung (z) nach oben ist, und/oder
- wobei die Erfassungsrichtung (-z) nach unten ist.

3. Outdoorbearbeitungssystem (1) nach einem der vorhergehenden Ansprüche,
- wobei das Fahrwerk (4) eine Fahrebene (4E) aufweist, und
- wobei der untere Berührungspunkt (uP) und der obere Berührungspunkt (oP) entlang einer in Bezug auf die Fahrebene (4E) orthogonalen Höhenrichtung (z) sind, und/oder
- wobei die Höhengrenze (HG), insbesondere in der Höhenrichtung (z), über der Fahrebene (4E) ist, und/oder
- wobei die Ausweichrichtung (z), insbesondere nicht-orthogonal, insbesondere parallel, in Bezug auf die Höhenrichtung (z), von der Fahrebene (4E) weg ist, und/oder
- wobei die Erfassungsrichtung (-z), insbesondere nicht-orthogonal, insbesondere antiparallel, in Bezug auf die Höhenrichtung (z), zu der Fahrebene (4E) hin ist.

4. Outdoorbearbeitungssystem (1) nach einem der vorhergehenden Ansprüche,
- wobei der Outdoorbearbeitungsroboter (2) mindestens eine Elementschwinge (6) aufweist,
- wobei mindestens die Elementschwinge (6) drehbeweglich um eine Drehachse (6A) herum gelagert ist, wobei die Drehachse (6A) nicht-parallel, insbesondere orthogonal, in Bezug auf die Fahrtrichtung (x), ist, und
- wobei an mindestens die Elementschwinge (6) das Berührungselement (5) derart angebunden ist, dass die Ausweichbewegung in der Ausweichrichtung (z) eine Ausweich-Drehbewegung mindestens der Elementschwinge (6) um die Drehachse (6A) herum in einer Ausweich-Drehrichtung (r) verursacht und die Erfassungsbewegung in der Erfassungsrichtung (-z) eine Erfassungs-Drehbewegung mindestens der Elementschwinge (6) um die Drehachse (6A) herum in einer Erfassungs-Drehrichtung (-r) verursacht, wobei die Ausweich-Drehrichtung (r) und die Erfassungs-Drehrichtung (-r) verschieden sind, und
- wobei die Sensor- und Steuerungseinrichtung (3) zur Erfassung der Erfassungs-Drehbewegung oder einer durch die Erfassungs-Drehbewegung verursachten Bewegung und zur Steuerung der Schutzfunktion (SF) ausgelöst durch die erfasste Erfassungs-Drehbewegung oder die erfasste Bewegung ausgebildet ist, und
- wobei die Sensor- und Steuerungseinrichtung (3) die Ausweich-Drehbewegung oder eine durch die Ausweich-Drehbewegung verursachte Bewegung nicht erfasst oder nicht auswertet.

5. Outdoorbearbeitungssystem (1) nach Anspruch 4,
- wobei mindestens die Elementschwinge (6) eine geschobene Elementschwinge (6') ist, und/oder
- wobei die Drehachse (6A) oberhalb der Höhengrenze (HG), insbesondere bei keiner Hindernisberührung, ist.

6. Outdoorbearbeitungssystem (1) nach einem der vorhergehenden Ansprüche,
- wobei das Berührungselement (5) unterhalb der Höhengrenze (HG) einen Verlauf von vorne oben nach unten hinten, insbesondere entgegen der Fahrtrichtung (-x), aufweist, insbesondere mit einem Winkel (α) zu der Fahrtrichtung (x) von maximal 60 °, insbesondere maximal 45 °, insbesondere 30 °, insbesondere bei keiner Hindernisberührung, und/oder
- wobei das Berührungselement (5) auf oder oberhalb der Höhengrenze (HG) einen Verlauf von vorne unten nach oben, insbesondere hinten, insbesondere entgegen der Fahrtrichtung (-x), aufweist, insbesondere bei keiner Hindernisberührung.

7. Outdoorbearbeitungssystem (1) nach einem der vorhergehenden Ansprüche,
- wobei der Outdoorbearbeitungsroboter (2) eine Abdeckhaube (7) aufweist,
- wobei die Abdeckhaube (7) oberhalb des Berührungselements (5) ist und gegenüber dem Fahrwerk (4) beweglich gelagert ist, und
- wobei das Berührungselement (5) derart gegenüber der Abdeckhaube (7) beweglich gelagert ist, dass die Erfassungsbewegung eine Haubenbewegung, insbesondere entgegen der Fahrtrichtung (-x), der Abdeckhaube (7) gegenüber dem Fahrwerk (4) verursacht, insbesondere und die Ausweichbewegung nicht, und
- wobei die Sensor- und Steuerungseinrichtung (3) zur Erfassung der Haubenbewegung oder einer durch die Haubenbewegung verursachten Bewegung und zur Steuerung der Schutzfunktion (SF) ausgelöst durch die erfasste Haubenbewegung oder die erfasste Bewegung ausgebildet ist.

8. Outdoorbearbeitungssystem (1) nach Anspruch 7,
- wobei die Abdeckhaube (7) zu der Haubenbewegung durch die Fahrbewegung in die Fahrtrichtung (x) und eine Hindernisberührung mit einem Haubenpunkt (7P) ausgebildet ist.

9. Outdoorbearbeitungssystem (1) nach einem der vorhergehenden Ansprüche, insbesondere nach Anspruch 7 oder 8,
- wobei das Berührungselement (5) mittels einer Feder (8) und/oder an der Abdeckhaube (7) aufgehängt ist, und/oder
- wobei das Berührungselement (5) zu einer Berührung einer zu bearbeitenden Fläche (100) ausgebildet ist.

10. Outdoorbearbeitungssystem (1) nach Anspruch 9,
- wobei das Berührungselement (5) zu einem Gleiten auf der Fläche (100), insbesondere als eine Kufe (5'), ausgebildet ist, und/oder
- wobei das Berührungselement (5) zu einem Rollen auf der Fläche (100), insbesondere als eine Walze, ausgebildet ist.

11. Outdoorbearbeitungssystem (1) nach einem der vorhergehenden Ansprüche,
- wobei der Outdoorbearbeitungsroboter (2) ein Bearbeitungswerkzeug (9) aufweist,
- wobei das Berührungselement (5) vor dem Bearbeitungswerkzeug (9), insbesondere in der Fahrtrichtung (x), ist.

12. Outdoorbearbeitungssystem (1) nach einem der vorhergehenden Ansprüche,
- wobei der Outdoorbearbeitungsroboter (2) ein Bearbeitungswerkzeug (9) aufweist, wobei das Bearbeitungswerkzeug (9) ein Rasenmähwerkzeug (9') aufweist, und/oder
- wobei der Outdoorbearbeitungsroboter (2) als ein Rasenmähroboter (2') ausgebildet ist.

13. Outdoorbearbeitungssystem (1) nach einem der vorhergehenden Ansprüche,
- wobei der Outdoorbearbeitungsroboter (2) ein Werkzeug-System (10) aufweist, wobei das Werkzeug-System (10) ein Bearbeitungswerkzeug (9) aufweist, und wobei die Sensor- und Steuerungseinrichtung (3) zur Steuerung, insbesondere zur Deaktivierung, des Werkzeug-Systems (10) als die Schutzfunktion (SF) ausgebildet ist, und/oder
- wobei der Outdoorbearbeitungsroboter (2) ein Fahr-System (11) aufweist, wobei das Fahr-System (11) das Fahrwerk (4) aufweist, und wobei die Sensor- und Steuerungseinrichtung (3) zur Steuerung, insbesondere zur Deaktivierung, des Fahr-Systems (11) als die Schutzfunktion (SF) ausgebildet ist.

## Claims

1. Outdoor treatment system (1),
- wherein the outdoor treatment system (1) comprises an autonomous mobile outdoor treatment robot (2) and a sensor and control device (3),
- wherein the outdoor treatment robot (2) comprises a chassis (4) and a contact element (5),
- wherein the chassis (4) is designed to execute a travelling movement of the outdoor treatment robot (2) in a direction of travel (x), and
- wherein the contact element (5) is designed to execute an avoiding movement in an avoiding direction (z) as a result of the travelling movement in the direction of travel (x) and contact between an obstacle and a lower contact point (uP) below a height limit (HG) and to execute a detection movement in a detection direction (-z) as a result of the travelling movement in the direction of travel (x) and contact between an obstacle and an upper contact point (oP) at or above the height limit (HG) and is mounted so that it can move with respect to the chassis (4), wherein the avoiding direction (z) and the detection direction (-z) are different,
**characterized in that**
- the sensor and control device (3) is designed to detect the detection movement of the contact element (5) or a movement caused by the detection movement, and to control a protective function (SF) of the outdoor treatment robot (2) triggered by the detected detection movement or the detected movement, and
- the sensor and control device (3) is designed not to detect or to evaluate the avoiding movement of the contact element (5) or a movement caused by the avoiding movement.

2. Outdoor treatment system (1) according to Claim 1,
- wherein the avoiding direction (z) is upwards, and/or
- wherein the detection direction (-z) is downwards.

3. Outdoor treatment system (1) according to one of the preceding claims,
- wherein the chassis (4) comprises a plane of travel (4E), and
- wherein the lower contact point (uP) and the upper contact point (oP) are in a height direction (z) which is orthogonal with respect to the plane of travel (4E), and/or
- wherein the height limit (HG) is, in particular in the height direction (z), above the plane of travel (4E), and/or
- wherein the avoiding direction (z) is, in particular non-orthogonally, in particular parallel, with respect to the height direction (z), away from the plane of travel (4E), and/or
- wherein the detection direction (-z) is, in particular non-orthogonally, in particular antiparallel, with respect to the height direction (z), towards the plane of travel (4E).

4. Outdoor treatment system (1) according to one of the preceding claims,
- wherein the outdoor treatment robot (2) comprises at least one element swing arm (6),
- wherein at least the element swing arm (6) is mounted so that it can move in rotation about an axis of rotation (6A), wherein the axis of rotation (6A) is non-parallel, in particular orthogonal, with respect to the direction of travel (x), and
- wherein the contact element (5) is connected to at least the element swing arm (6) in such a way that the avoiding movement in the avoiding direction (z) causes an avoiding rotational movement at least of the element swing arm (6) about the axis of rotation (6A) in an avoiding rotational direction (r), and the detection movement in the detection direction (-z) causes a detection rotational movement at least of the element swing arm (6) about the axis of rotation (6A) in a detection rotational direction (-r), wherein the avoiding rotational direction (r) and the detection rotational direction (-r) are different, and
- wherein the sensor and control device (3) is designed to detect the detection rotational movement or a movement caused by the detection rotational movement, and to control the protective function (SF) triggered by the detected detection rotational movement or the detected movement, and
- wherein the sensor and control device (3) does not detect or evaluate the avoiding rotational movement or a movement caused by the avoiding rotational movement.

5. Outdoor treatment system (1) according to Claim 4,
- wherein at least the element swing arm (6) is a pushed element swing arm (6'), and/or
- wherein the axis of rotation (6A) is above the height limit (HG), in particular when no contact is made with an obstacle.

6. Outdoor treatment system (1) according to one of the preceding claims,
- wherein the contact element (5) below the height limit (HG) comprises a course from top front to bottom rear, in particular counter to the direction of travel (-x), in particular with an angle (α) relative to the direction of travel (x) of no more than 60°, in particular no more than 45°, in particular 30°, in particular when no contact is made with an obstacle, and/or
- wherein the contact element (5) at or above the height limit (HG) comprises a course from bottom front upwards, in particular backwards, in particular counter to the direction of travel (-x), in particular when no contact is made with an obstacle.

7. Outdoor treatment system (1) according to one of the preceding claims,
- wherein the outdoor treatment robot (2) comprises a cover hood (7),
- wherein the cover hood (7) is above the contact element (5) and is mounted so that it can move with respect to the chassis (4), and
- wherein the contact element (5) is mounted so that it can move with respect to the cover hood (7) in such a way that the detection movement causes a hood movement, in particular counter to the direction of travel (-x), of the cover hood (7) with respect to the chassis (4), in particular, and the avoiding movement does not, and
- wherein the sensor and control device (3) is designed to detect the hood movement or a movement caused by the hood movement and to control the protective function (SF) triggered by the detected hood movement or the detected movement.

8. Outdoor treatment system (1) according to Claim 7,
- wherein the cover hood (7) is designed to execute the hood movement as a result of the travelling movement in the direction of travel (x) and contact between an obstacle and a hood point (7P) .

9. Outdoor treatment system (1) according to one of the preceding claims, in particular according to Claim 7 or 8,
- wherein the contact element (5) is suspended by means of a spring (8) and/or on the cover hood (7), and/or
- wherein the contact element (5) is designed to make contact with a surface (100) to be treated.

10. Outdoor treatment system (1) according to Claim 9,
- wherein the contact element (5) is designed to slide on the surface (100), in particular as a skid (5'), and/or
- wherein the contact element (5) is designed to roll on the surface (100), in particular as a roller.

11. Outdoor treatment system (1) according to one of the preceding claims,
- wherein the outdoor treatment robot (2) comprises a treatment tool (9),
- wherein the contact element (5) is in front of the treatment tool (9), in particular in the direction of travel (x).

12. Outdoor treatment system (1) according to one of the preceding claims,
- wherein the outdoor treatment robot (2) comprises a treatment tool (9), wherein the treatment tool (9) comprises a lawn mowing tool (9'), and/or
- wherein the outdoor treatment robot (2) is designed as a robot lawn mower (2').

13. Outdoor treatment system (1) according to one of the preceding claims,
- wherein the outdoor treatment robot (2) comprises a tool system (10), wherein the tool system (10) comprises a treatment tool (9), and wherein the sensor and control device (3) is designed to control, in particular to deactivate, the tool system (10) as the protective function (SF), and/or
- wherein the outdoor treatment robot (2) comprises a travel system (11), wherein the travel system (11) comprises the chassis (4), and wherein the sensor and control device (3) is designed to control, in particular to deactivate, the travel system (11) as the protective function (SF).

## Revendications

1. Système de traitement en extérieur (1),
- le système de traitement en extérieur (1) possédant un robot de traitement en extérieur (2) mobile autonome et un dispositif capteur et de commande (3),
- le robot de traitement en extérieur (2) possédant un châssis roulant (4) et un élément de contact (5),
- le châssis roulant (4) étant configuré pour un mouvement de déplacement du robot de traitement en extérieur (2) dans une direction de déplacement (x), et
- l'élément de contact (5) étant configuré pour un mouvement d'évitement dans une direction d'évitement (z) par le mouvement de déplacement dans la direction de déplacement (x) et un contact d'obstacle avec un point de contact inférieur (uP) en dessous d'une limite de hauteur (HG) et pour un mouvement de détection dans une direction de détection (-z) par le mouvement de déplacement dans la direction de déplacement (x) et un contact d'obstacle avec un point de contact supérieur (oP) sur ou au-dessus de la limite de hauteur (HG) et étant monté mobile par rapport au châssis roulant (4), la direction d'évitement (z) et la direction de détection (-z) étant différentes, **caractérisé en ce que** le dispositif capteur et de commande (3) est configuré pour détecter le mouvement de détection de l'élément de contact (5) ou un mouvement provoqué par le mouvement de détection et pour commander une fonction de protection (SF) du robot de traitement en extérieur (2) déclenchée par le mouvement de détection détecté ou le mouvement détecté, et
- le dispositif capteur et de commande (3) est configuré pour ne pas détecter ou ne pas évaluer le mouvement d'évitement de l'élément de contact (5) ou un mouvement provoqué par le mouvement d'évitement.

2. Système de traitement en extérieur (1) selon la revendication 1,
- la direction d'évitement (z) étant vers le haut, et/ou
- la direction de détection (-z) étant vers le bas.

3. Système de traitement en extérieur (1) selon l'une des revendications précédentes,
- le châssis roulant (4) possédant un plan de déplacement (4E), et
- le point de contact inférieur (uP) et le point de contact supérieur (oP) étant le long d'un sens de la hauteur (z) qui est orthogonal par rapport au plan de déplacement (4E), et/ou
- la limite de hauteur (HG), notamment dans le sens de la hauteur (z), se trouvant au-dessus du plan de déplacement (4E), et/ou
- la direction d'évitement (z), notamment non orthogonale, en particulier parallèle, par rapport au sens de la hauteur (z), s'éloignant du plan de déplacement (4E), et/ou
- la direction de détection (-z), notamment non orthogonale, en particulier antiparallèle, par rapport au sens de la hauteur (z), se rapprochant du plan de déplacement (4E).

4. Système de traitement en extérieur (1) selon l'une des revendications précédentes,
- le robot de traitement en extérieur (2) possédant au moins un bras oscillant d'élément (6),
- au moins le bras oscillant d'élément (6) étant monté mobile en rotation autour d'un axe de rotation (6A), l'axe de rotation (6A) étant non parallèle, notamment orthogonal, par rapport à la direction de déplacement (x), et
- l'élément de contact (5) étant relié au moins au bras oscillant d'élément (6) de telle sorte que le mouvement d'évitement dans la direction d'évitement (z) provoque un mouvement de rotation d'évitement d'au moins le bras oscillant d'élément (6) autour de l'axe de rotation (6A) dans un sens de rotation d'évitement (r) et le mouvement de détection dans la direction de détection (-z) provoque un mouvement de rotation de détection d'au moins le bras oscillant d'élément (6) autour de l'axe de rotation (6A) dans un sens de rotation de détection (-r), le sens de rotation d'évitement (r) et le sens de rotation de détection (-r) étant différents, et
- le dispositif capteur et de commande (3) étant configuré pour détecter le mouvement de rotation de détection ou un mouvement provoqué par le mouvement de rotation de détection et pour commander la fonction de protection (SF) déclenchée par le mouvement de rotation de détection détecté ou le mouvement détecté, et
- le dispositif capteur et de commande (3) ne détectant pas ou n'évaluant pas le mouvement de rotation d'évitement ou un mouvement provoqué par le mouvement de rotation d'évitement.

5. Système de traitement en extérieur (1) selon la revendication 4,
- au moins le bras oscillant d'élément (6) étant un bras oscillant d'élément poussé (6'), et/ou
- l'axe de rotation (6A) se trouvant au-dessus de la limite de hauteur (HG), notamment lorsqu'il n'y a pas de contact d'obstacle.

6. Système de traitement en extérieur (1) selon l'une des revendications précédentes,
- l'élément de contact (5) présentant, en dessous de la limite de hauteur (HG), un tracé de l'avant en haut vers l'arrière en bas, notamment à l'opposé de la direction de déplacement (-x), en particulier avec un angle (α) par rapport à la direction de déplacement (x) au maximum de 60°, notamment au maximum de 45°, notamment de 30°, notamment lorsqu'il n'y a pas de contact d'obstacle, et/ou
- l'élément de contact (5) présentant, sur ou au-dessus de la limite de hauteur (HG), un tracé de l'avant en bas vers le haut, notamment vers l'arrière, notamment à l'opposé de la direction de déplacement (-x), notamment lorsqu'il n'y a pas de contact d'obstacle.

7. Système de traitement en extérieur (1) selon l'une des revendications précédentes,
- le robot de traitement en extérieur (2) possédant un capot de protection (7),
- le capot de protection (7) se trouvant au-dessus de l'élément de contact (5) et étant monté mobile par rapport au châssis roulant (4), et
- l'élément de contact (5) étant monté mobile par rapport au capot de protection (7) de telle sorte que le mouvement de détection provoque un mouvement de capot, notamment à l'opposé de la direction de déplacement (-x), du capot de protection (7) par rapport au châssis roulant (4), en particulier et pas le mouvement d'évitement, et
- le dispositif capteur et de commande (3) étant configuré pour détecter le mouvement de capot ou un mouvement provoqué par le mouvement de capot et pour commander la fonction de protection (SF) déclenchée par le mouvement de capot détecté ou le mouvement détecté.

8. Système de traitement en extérieur (1) selon la revendication 7,
- le capot de protection (7) étant configuré pour le mouvement de capot par le mouvement de déplacement dans la direction de déplacement (x) et un contact d'obstacle avec un point de capot (7P).

9. Système de traitement en extérieur (1) selon l'une des revendications précédentes, notamment selon la revendication 7 ou 8,
- l'élément de contact (5) étant suspendu au moyen d'un ressort (8) et/ou au capot de protection (7), et/ou
- l'élément de contact (5) étant configuré pour un contact avec une surface (100) à traiter.

10. Système de traitement en extérieur (1) selon la revendication 9,
- l'élément de contact (5) étant configuré pour glisser sur la surface (100), notamment sous la forme d'un patin (5'), et/ou
- l'élément de contact (5) étant configuré pour rouler sur la surface (100), notamment sous la forme d'un rouleau.

11. Système de traitement en extérieur (1) selon l'une des revendications précédentes,
- le robot de traitement en extérieur (2) possédant un outil de traitement (9),
- l'élément de contact (5) se trouvant devant l'outil de traitement (9), notamment dans la direction de déplacement (x).

12. Système de traitement en extérieur (1) selon l'une des revendications précédentes,
- le robot de traitement en extérieur (2) possédant un outil de traitement (9), l'outil de traitement (9) possédant un outil de tonte de gazon (9'), et/ou
- le robot de traitement en extérieur (2) étant réalisé sous la forme d'un robot de tonte de gazon (2').

13. Système de traitement en extérieur (1) selon l'une des revendications précédentes,
- le robot de traitement en extérieur (2) possédant un système d'outils (10), le système d'outils (10) possédant un outil de traitement (9), et le dispositif capteur et de commande (3) étant configuré pour commander, notamment pour désactiver, le système d'outils (10) en tant que fonction de protection (SF), et/ou
- le robot de traitement en extérieur (2) possédant un système de déplacement (11), le système de déplacement (11) possédant le châssis roulant (4), et le dispositif capteur et de commande (3) étant configuré pour commander, notamment pour désactiver, le système de déplacement (11) en tant que fonction de protection (SF).
